# EUROPEAN PATENT APPLICATION

(11) **EP 4 020 236 A1**
(43) Date of publication of application: **29.06.2022**
(21) Application number: 21197112.2
(22) Date of filing: 16.09.2021
(51) Int. Cl.: G06F 12/14, G06F 21/53, G06F 21/60, G06F 21/79, G06F 12/1009, G06F 12/109

(54) **ISOLATING MEMORY WITHIN TRUSTED EXECUTION ENVIRONMENTS**

(30) Priority: 23.12.2020 US 202017131751
(71) Applicant: Intel Corporation, Santa Clara, CA 95054 (US)
(72) Inventor: SHANBHOGUE, Vedvyas, Austin, 78738 (US); SAHITA, Ravi, Portland, 97229 (US); VIJ, Mona, Hillsboro, 97124-5961 (US); ILLIKKAL, Rameshkumar, Folsom, 95630 (US); GOH, Teck Joo, Saratoga, 95070 (US); KURIATA, Andrzej, 80292 Gdansk (PL); XIA, Haidong, Folsom, 95630 (US); VAHLDIEK-OBERWAGNER, Anjo Lucas, Portland, 97229 (US)
(74) Representative: Viering, Jentschura & Partner mbB Patent- und Rechtsanwälte

(57) **Abstract**

Example methods and systems are directed to isolating memory in trusted execution environments (TEEs). In function-as-a-service (FaaS) environments, a client makes use of a function executing within a TEE on a FaaS server. To minimize the trusted code base (TCB) for each function, each function may be placed in a separate TEE. However, this causes the overhead of creating a TEE to be incurred for each function. As discussed herein, multiple functions may be placed in a single TEE without compromising the data integrity of each function. For example, by using a different extended page table (EPT) for each function, the virtual address spaces of the functions are kept separate and map to different, non-overlapping physical address spaces. Partial overlap may be permitted to allow functions to share some data while protecting other data. Memory for each function may be encrypted using a different encryption key.

## Description

### TECHNICAL FIELD

The subject matter disclosed herein generally relates to hardware trusted execution environments (TEEs). Specifically, the present disclosure addresses systems and methods for isolating memory within TEEs.

### BACKGROUND

Hardware privilege levels may be used by a processor to limit memory access by applications running on a device. An operating system runs at a higher privilege level and can access all memory of the device and define memory ranges for other applications. The applications, running a lower privilege level, are restricted to accessing memory within the range defined by the operating system and are not able to access the memory of other applications or the operating system.

### BRIEF DESCRIPTION OF THE DRAWINGS

Some embodiments are illustrated by way of example and not limitation in the figures of the accompanying drawings.
FIG. 1 is a network diagram illustrating a network environment suitable for servers providing functions as a service using TEEs, according to some example embodiments.
FIG. 2 is a block diagram of a function-as-a-service server, according to some example embodiments, suitable for use in isolating memory in TEEs.
FIG. 3 is a block diagram of prior art ring-based memory protection.
FIG. 4 is a block diagram of enclave-based memory protection, suitable for reducing latency of TEEs according to some example embodiments.
FIG. 5 is a block diagram of address mappings using an extended page table, according to some example embodiments, suitable for use in isolating memory in TEEs.
FIG. 6 is a block diagram of a communication sequence between a virtual machine manager (VMM) and a Secure-Arbitration Mode (SEAM) module along with the resulting memory space of a TEE, according to some example embodiments.
FIG. 7 is a block diagram of a communication sequence between a VMM and a TDX module along with the resulting memory space of a TEE, according to some example embodiments.
FIG. 8 is a flowchart illustrating operations of a method suitable for execution by a server in isolating memory in TEEs, according to some example embodiments.
FIG. 9 is a block diagram showing one example of a software architecture for a computing device.
FIG. 10 is a block diagram of a machine in the example form of a computer system within which instructions may be executed for causing the machine to perform any one or more of the methodologies discussed herein.

### DETAILED DESCRIPTION

Example methods and systems are directed to reducing latency in providing TEEs. In the most general sense, a TEE is any trusted execution environment, regardless of how that trust is obtained. However, as used herein, TEEs are provided by executing code within enclaves. An enclave is a portion of memory protected from access by processes outside of the enclave, even if those processes are running at an elevated privilege level.

An enclave is enabled by processor protections that guarantee that code and data loaded inside the enclave is protected from access by code executing outside of the enclave. Thus, the enclave provides an isolated execution environment that prevents, at the hardware level, access of the data and code contained in the enclave from malicious software, including the operating system.

TEEs may be used to enable the secure handling of confidential information by protecting the confidential information from all software outside of the TEE. TEEs may also be used for modular programming, wherein each module contains everything necessary for its own functionality without being exposed to vulnerabilities caused by other modules. For example, a code injection attack that is successful against one TEE cannot impact the code of another TEE.

Total memory encryption (TME) protects data in memory from being accessed by bypassing a processor. The system generates an encryption key within the processor on boot and never stores the key outside of the processor. The TME encryption key is an ephemeral key because it does not persist across reboots and is never stored outside of the processor. All data written by the processor to memory is encrypted using the encryption key and decrypted when it read back from memory. Thus, a hardware-based attack that attempts to read data directly from memory without processor intermediation will fail.

Multi-key TME (MKTME) extends TME to make use of multiple keys. Individual memory pages may be encrypted using the ephemeral key of TME or using software-provided keys. This may provide increased security over TME with respect to software-based attacks, since an attacker will need to identify the particular key being used by targeted software rather than having the processor automatically decrypt any memory that the attack software has gained access to.

In function-as-a-service (FaaS) environments, a client makes use of a function executing within a TEE on a FaaS server. FaaS platforms provide cloud computing services that execute application logic but do not store data. Before providing confidential data to the function, the client verifies that the function is executing with a TEE and thus that the confidential data cannot be accessed by other functions that are not part of the trusted environment.

To minimize the TCB for each function, each function may be placed in a separate TEE. However, this causes the overhead of creating a TEE to be incurred for each function. As discussed herein, multiple functions may be placed in a single TEE without compromising the data integrity of each function. For example, by using a different extended page table (EPT) for each function, the virtual address spaces of the functions are kept separate and map to different, nonoverlapping physical address spaces. Alternatively, partial overlap may be permitted to allow functions to share some data while protecting other data.

Alternatively or additionally, memory for each function may be encrypted using a different encryption key. Thus, even if a function does gain access to memory associated with a different function, the function will not be able to decrypt the data.

Multiple tenants of the FaaS platform may provide functions to be executed by the FaaS platform via a gateway. A tenant is a group of users that share common access to data, such as users with accounts linked to a particular company. Protection of data between tenants may be a goal of the tenants and the FaaS platform. The FaaS platform comprises one or more FaaS servers, in one or more datacenters. Thus, the gateway may include a load-balancer or other functionality for distributed computing. Since the FaaS platform is providing functionality for multiple tenants via the gateway, no one tenant can control the gateway.

As discussed herein, each tenant may provide code and data for any number of functions to be executed within any number of TEEs on the FaaS platform and accessed via the gateway. Using the systems and methods described herein, fewer TEEs may be created per tenant (e.g., one TEE per tenant).

By comparison with existing methods of protecting memory in TEEs, the methods and systems discussed herein enable the use of a single TEE with multiple memory spaces, allowing for intra-TEE protection. Since the overhead of a single TEE does not increase when multiple functions are executed within the TEE, computing overhead is reduced. When these effects are considered in aggregate, one or more of the methodologies described herein may obviate a need for certain efforts or resources that otherwise would be involved in creating TEEs or providing an FaaS platform. Computing resources used by one or more machines, databases, or networks may similarly be reduced. Examples of such computing resources include processor cycles, network traffic, memory usage, data storage capacity, power consumption, and cooling capacity.

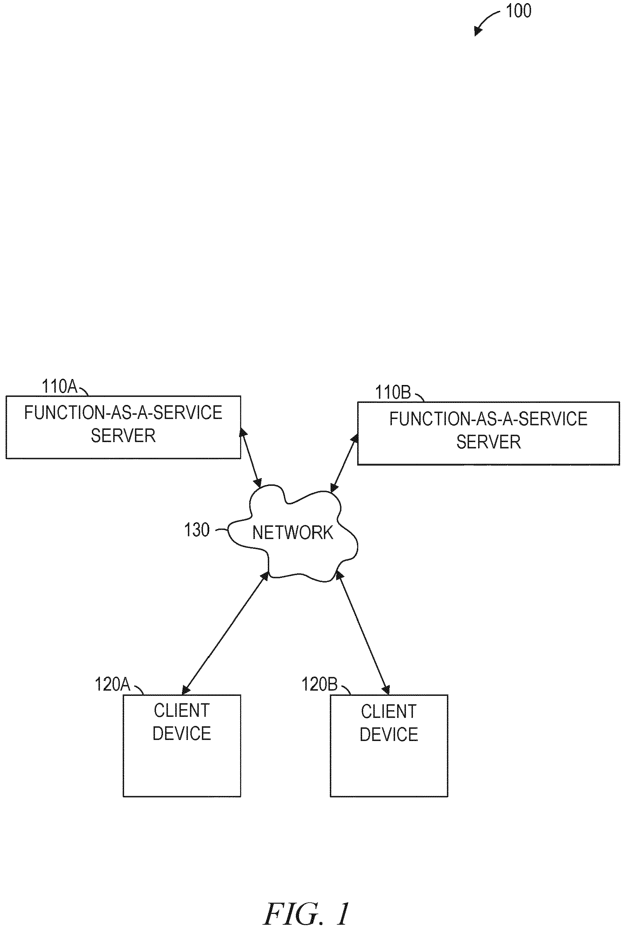

FIG. 1 is a network diagram illustrating a network environment 100 suitable for servers providing functions as a service using TEEs, according to some example embodiments. The network environment 100 includes a FaaS servers 110A and 110B, client devices 120A and 120B, and a network 130. The FaaS servers 110A-110B provide functions to client devices 120A-120B via the network 130. The FaaS servers 110A and 110B may be referred to collectively as FaaS servers 120 or generically as a FaaS server 120. The client devices 120A and 120B may be referred to collectively as client devices 120 or generically as a client device 120.

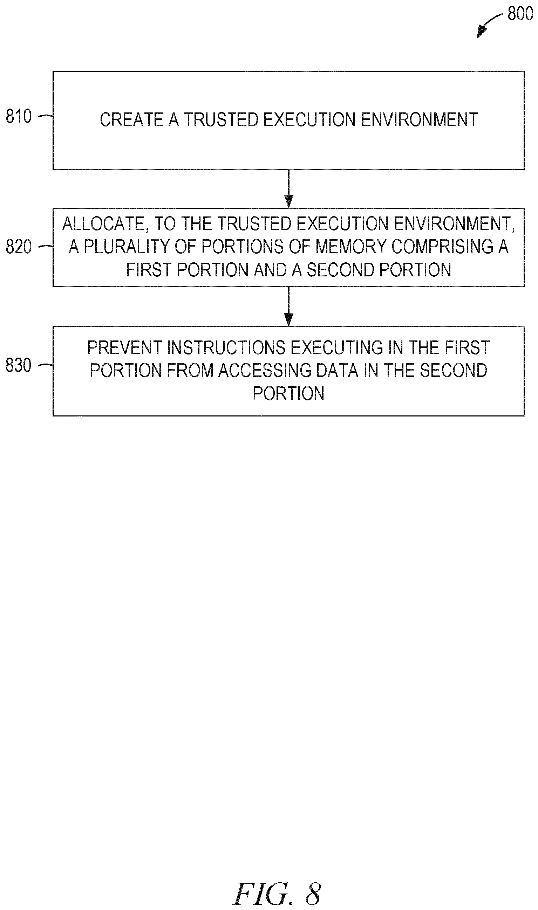

The client devices 120A and 120B may be devices of different tenants, such that each tenant wants to ensure that their tenant-specific data and code is not accessible by other tenants. Accordingly, the FaaS servers 110A-110B may use an enclave for each FaaS provided, or each tenant, or any suitable combination thereof. The FaaS servers 110A-110B and the client devices 120A and 120B may each be implemented in a computer system, in whole or in part, as described below with respect to FIG. 8.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 8. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The FaaS servers 110 and the client devices 120 are connected by the network 130. The network 130 may be any network that enables communication between or among machines, databases, and devices. Accordingly, the network 130 may be a wired network, a wireless network (e.g., a mobile or cellular network), or any suitable combination thereof. The network 130 may include one or more portions that constitute a private network, a public network (e.g., the Internet), or any suitable combination thereof. Each of the devices is connected to the network 130 using a network interface.

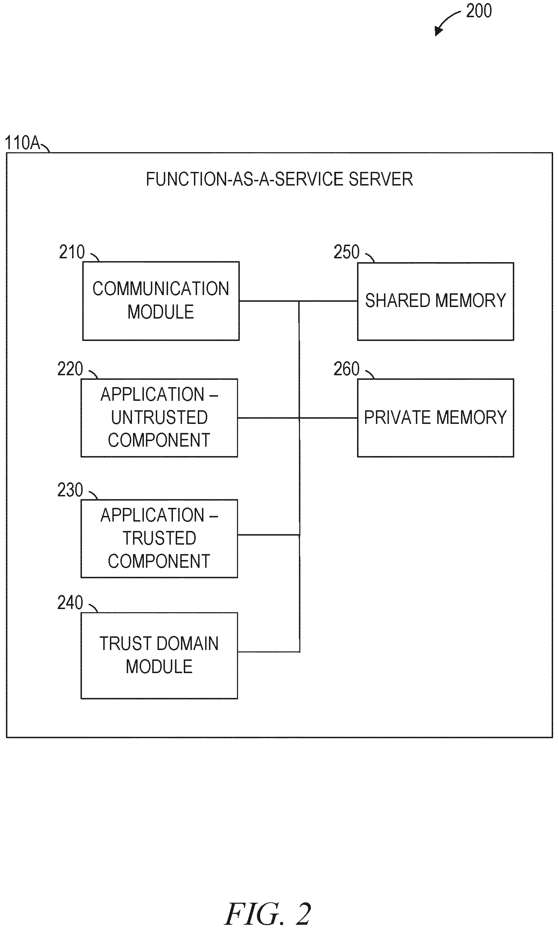

FIG. 2 is a block diagram 200 of the FaaS server 110A, according to some example embodiments, suitable for use in isolating memory in TEEs. The FaaS server 110A is shown as including a communication module 210, an untrusted component 220 of an application, a trusted component 230 of an application, a trust domain module 240, a shared memory 250, and a private memory 260, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

The communication module 210 receives data sent to the FaaS server 110A and transmits data from the FaaS server 110A. For example, the communication module 210 may receive, from the client device 130A, a request to perform a function. After the function is performed, the results of the function are provided by the communication module 210 to the client device 130A. Communications sent and received by the communication module 210 may be intermediated by the network 130. The called function may be intermediated by another function. For example, the communication module 210 may provide a URL to the untrusted component 220. The untrusted component 220 parses the URL and invokes a function in the trusted component 230.

The untrusted component 220 may execute outside of an enclave. Thus, if the operating system or other untrusted components are compromised, the untrusted component 220 is vulnerable to attack. The trusted component 230 executes within an enclave. Thus, even if the operating system or the untrusted component 220 is compromised, the data and code of the trusted component 230 remains secure.

The trust domain module 240 creates and protects enclaves and is responsible for transitioning execution between the untrusted component 220 and the trusted component 230. Signed code may be provided to the trust domain module 240, which verifies that the code has not been modified since it was signed. The signed code is loaded into a portion of physical memory that is marked as being part of an enclave. Thereafter, hardware protections prevent access, modification, execution, or any suitable combination thereof of the enclave memory by untrusted software. The code may be encrypted using a key only available to the trust domain module 240.

Once the trusted component 230 is initialized, the untrusted component 220 can invoke functions of the trusted component 230 using special processor instructions of the trust domain module 240 that transition from an untrusted mode to a trusted mode or between trusted enclaves. The trusted component 230 performs parameter verification, performs the requested function if the parameters are valid, and returns control to the untrusted component 220 via the trust domain module 240. Multiple trusted components 230 may be instantiated in the FaaS server 110A, each providing one or more functions.

The trust domain module 240 may be implemented as one or more components of an Intel^{®} hardware processor providing Intel^{®} Software Guard Extensions (SGX), Intel^{®} Trust Domain Extensions (TDX), or both.

Both the untrusted component 220 and the trusted component 230 can access and modify the shared memory 250, but only the trusted component 230 can access and modify the private memory 260. Though only one trusted component 230 and one private memory 260 are shown in FIG. 2, each tenant may have multiple trusted components 230, each with a corresponding private memory 260. In some example embodiments, multiple trusted components 230 exist within a single enclave. Additionally, multiple applications may be run with separate memory spaces, and thus separate shared memories 250. In this context "shared" refers to the memory being accessible by all software and hardware with access to the memory space (e.g., an application and its operating system), not necessarily being accessible by all applications running on the system.

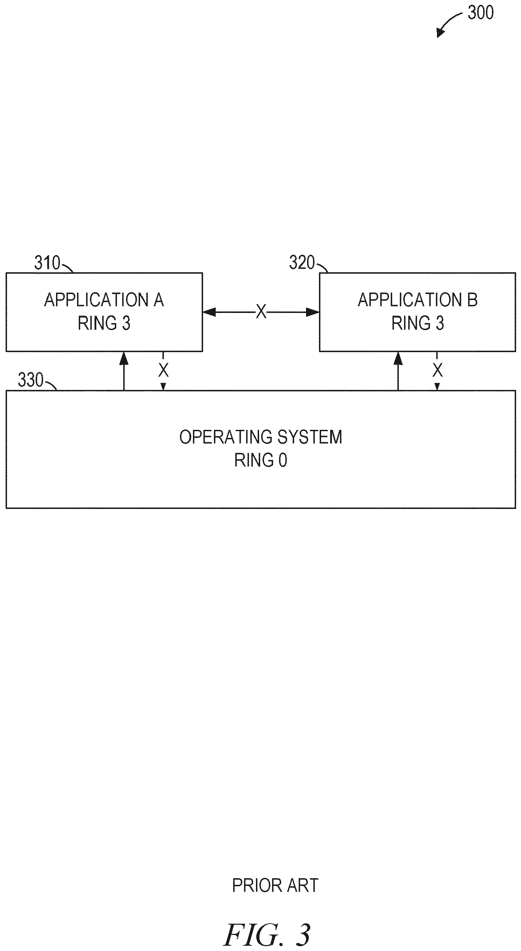

FIG. 3 is a block diagram 300 of prior art ring-based memory protection. The block diagram 300 includes applications 310 and 320 and an operating system 330. The operating system 330 executes processor commands in ring 0 (Intel^{®} and AMD^{®} processors), exception level 1 (ARM^{®} processors), or an equivalent privilege level. The applications 310-320 execute processor commands in ring 3 (Intel^{®} and AMD^{®} processors), exception level 0 (ARM^{®} processors), or an equivalent privilege level.

The hardware processor prevents code that is executing at the lower privilege level from accessing memory outside of the memory range defined by the operating system. Thus, the code of the application 310 cannot directly access the memory of the operating system 330 or the application 320 (as shown by the "X" in FIG. 3). The operating system 330 exposes some functionality to the applications 310-320 by predefining specific access points (e.g., by call gates, SYSENTER/SYSEXIT instructions on Intel^{®} processors, SYSCALL/SYSRET instructions on AMD^{®} processors, or any suitable combination or equivalent thereof).

Since the operating system 330 has access to all of memory, the applications 310 and 320 have no protection from a malicious operating system. For example, a competitor may modify the operating system before running the application 310 in order to gain access to the code and data of the application 310, permitting reverse engineering.

Additionally, if an application is able to exploit a vulnerability in the operating system 330 and promote itself to the privilege level of the operating system, the application would be able to access all of memory. For example, the application 310, which is not normally able to access the memory of the application 320 (as shown by the X between the applications 310 and 320 in FIG. 3), would be able to access the memory of the application 320 after promoting itself to ring 0 or exception level 1. Thus, if the user is tricked into running a malicious program (e.g., the application 310), private data of the user or an application provider may be accessed directly from memory (e.g., a banking password used by the application 320).

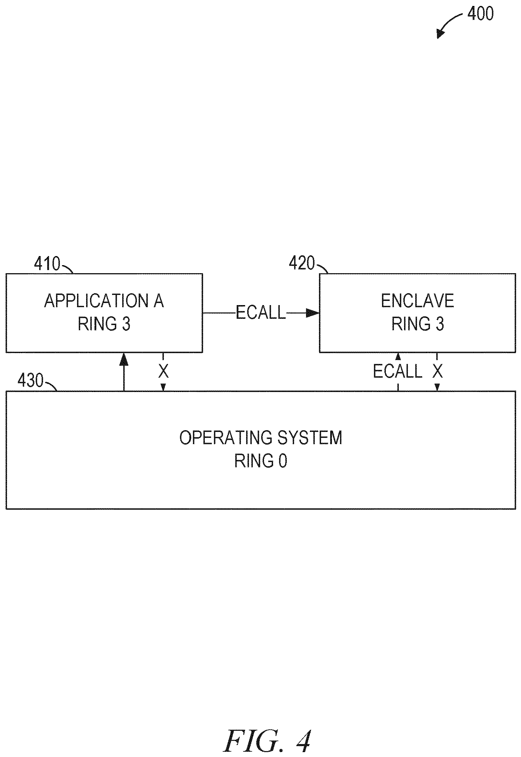

FIG. 4 is a block diagram 400 of enclave-based memory protection, suitable for reducing latency of TEEs according to some example embodiments. The block diagram 400 includes an application 410, an enclave 420, and an operating system 430. The operating system 430 executes processor commands in ring 0 (Intel^{®} and AMD^{®} processors), exception level 1 (ARM^{®} processors), or an equivalent privilege level. The application 410 and the enclave 420 execute processor commands in ring 3 (Intel^{®} and AMD^{®} processors), exception level 0 (ARM^{®} processors), or an equivalent privilege level.

The operating system 430 allocates the memory of the enclave 420 and indicates to the processor the code and data to be loaded into the enclave 420. However, once instantiated, the operating system 430 does not have access to the memory of the enclave 420. Thus, even if the operating system 430 is malicious or compromised, the code and data of the enclave 420 remains secure.

The enclave 420 may provide functionality to the application 410. The operating system 430 may control whether the application 410 is permitted to invoke functions of the enclave 420 (e.g., by using an ECALL instruction). Thus, a malicious application may be able to gain the ability to invoke functions of the enclave 420 by compromising the operating system 430. Nonetheless, the hardware processor will prevent the malicious application from directly accessing the memory or code of the enclave 420. Thus, while the code in the enclave 420 cannot assume that functions are being invoked correctly or by a non-attacker, the code in the enclave 420 has full control over parameter checking and other internal security measures and is only subject to its internal security vulnerabilities.

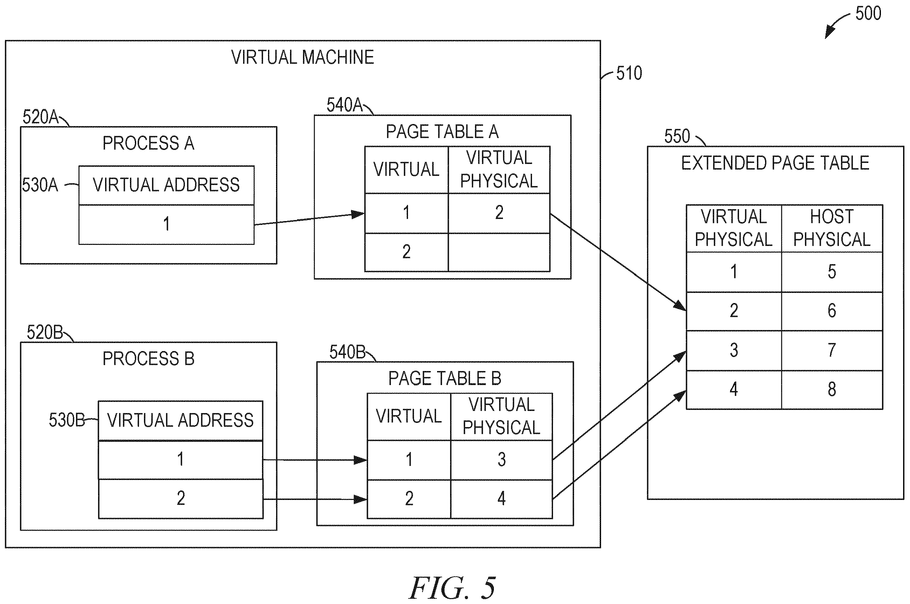

FIG. 5 is a block diagram 500 of address mappings using an extended page table, according to some example embodiments, suitable for use in isolating memory in TEEs. The block diagram 500 shows a virtual machine 510 running processes 520A and 520B. Each of the processes 520A-520B uses a corresponding set of virtual addresses 530A or 530B. The virtual addresses used by the processes are mapped to virtual physical addresses of the virtual machine using the page tables 540A and 540B. The virtual physical addresses of the virtual machine are mapped to the host physical addresses using the EPT 550.

Though a single virtual machine 510 is shown in FIG. 5, multiple virtual machines may exist on a single physical host. Each virtual machine has its own EPT, controlled by the physical host. In embodiments in which the host only allocates a physical address to a single EPT, each virtual machine is unable to access the memory of other virtual machines. Thus, executing different processes in different virtual machines protects the memory of each process.

Similarly, the virtual machine 510 protects the memory of the processes 520A and 520B through the use of different page tables 540A-540B. Each of the processes 520A-520B uses an independent virtual address space which is mapped by the page tables 540A-540B to different virtual physical addresses of the virtual machine 510. In embodiments in which the virtual machine 510 only allocates a virtual physical address to a single page table, each process 520A or 520B is unable to access the memory of other processes. Thus, executing different processes in different virtual memories protects the memory of each process.

However, if a malicious process is able to identify an exploit a vulnerability in the virtual machine 510, the process may be able to modify its page table, allowing it to access the memory of a different process. By keeping each process in a separate TEE, this vulnerability is avoided, but at the expense of creating a separate TEE for each function.

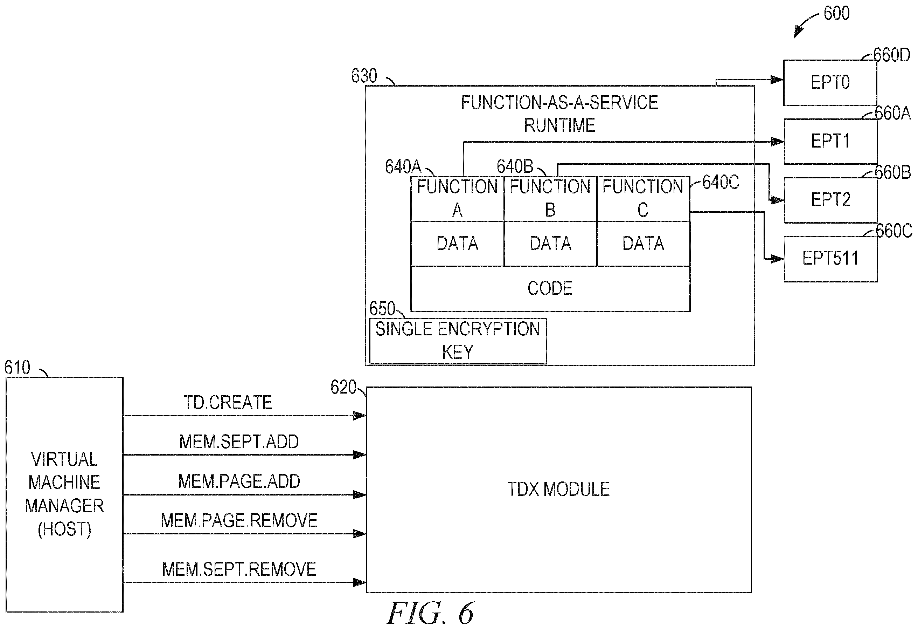

FIG. 6 is a block diagram 600 of a communication sequence between a VMM 610 and a TDX module 620 along with the resulting memory space of a TEE 630, according to some example embodiments. The memory of the TEE 630 is protected using a single encryption key 650. Within the TEE 630 are functions 640A, 640B, and 640C, each with its own data. By contrast with the block diagram 500, in which all processes 520A-520B shared a single EPT 550, each of the functions 640A-640C has a separate EPT 660A, 660B, or 660C. Additionally, the FaaS runtime of the TEE 630 has a separate EPT 660D. The FaaS runtime of the TEE 630 may be a guest operating system configured to invoke one or more of the functions 640A-640C (e.g., using a VMFunc instruction).

Additional security may be provided to reduce the risk that a function will use VMFunc to modify its own EPT to gain access to physical memory assigned to a different function. For example, control-flow enforcement technology (CET) may be used to enforce strict limits on the memory from which VMFunc instructions may be issued, allowing the guest operating system to issue VMFunc instructions but preventing the functions 640A-640C from doing so.

To create the TEE 630, the VMM 610 invokes functions of the hardware TDX module 620 integrated into a hardware processor. The VMM 610 can create a new guest TD by allocating an initializing a TD Root (TDR) control structure (e.g., using the TDH.MNG.CREATE function provided by Intel^{®} TDX and shown as TD.CREATE in FIG. 6). As an input to the creation function, the VMM 610 may assign the TD with a memory protection key identifier, also known as a Host Key ID (HKID). The HKID can be used by the CPU to tag memory accesses done by the TD and by the MKTMEs to select encryption/decryption keys. The keys themselves are not exposed to the VMM 610. The VMM 610 may program the HKID into the MKTME encryption engines (e.g., by using the TDH.MNG.KEYCONFIG function provided by Intel^{®} TDX).

After the TD is created, the VMM 610 may build the TD Control Structure (TDCS) by adding control structure pages and initializing them (e.g., by using the TDH.MNG.ADDCX and TDH.MNG.INIIT functions provided by Intel^{®} TDX). The VMM 610 may build the Secure EPT tree by adding one or more Secure EPT pages (e.g., using the TDH.MEM.SEPT.ADD function provided by Intel^{®} TDX and shown as MEM.SEPT.ADD in FIG. 6). The initial set of TD-private pages may also be added (e.g., using the TDH.MEM.PAGE.ADD function provided by Intel^{®} TDX and shown as MEM.PAGE.ADD in FIG. 6). The initial set of TD-private pages may contain Virtual Basic Input/Output System (BIOS) code and data along with some clear pages for stack and heap. Additional code and data for each function may be also be loaded.

After allocation, TD-private pages may be removed (e.g., using the TDH.MEM.PAGE.REMOVE function provided by Intel^{®} TDX and shown as MEM.PAGE.REMOVE in FIG. 6). Similarly, Secure EPT pages may be removed (e.g., using the TDH.MEM.SEPT.REMOVE function provided by Intel^{®} TDX and shown as MEM. SEPT.REMOVE in FIG. 6). Thus, the VMM 610 can control the creation and size of the TEE 630 and create separate Secure EPT pages for each of the functions 640A-640C, reducing the risk that a compromised function could be used to get access to code and data of another function. Since the TDX module 620, and thus the hardware processor, controls access to the EPTs 660A-660D, the malicious code will still not be able to access the physical memory of the other functions. This is true even though the single encryption key 650 is used for all memory allocated to the TEE 630.

When the two functions are in different portions of memory that use different EPTs, an ordinary jump or call command to cause one function to execute another will not be successful. Instead, a SEAM function call is made to enter the other memory space. Likewise, returning control to the calling function will be intermediated by the SEAM of the processor. As a result, the SEAM can provide additional protection for the separate memory spaces (e.g., by clearing processor pipelines, registers, other internal states, or any suitable combination thereof), reducing the ability of malicious code using one EPT from impacting code using another EPT.

Though each of the functions 640A-640C is shown using a separate one of the EPTs 660A-660C, the SEAM provides functions that allow memory to be added to an existing EPT. Thus, functions may share an EPT if desired. This may allow two closely-related functions to share direct access to each other's memory, trading off the security of greater isolation for a performance gain. For example, the function 640A may have its own EPT 660A while the functions 640B and 640C share the EPT 660B.

The EPT generally controls access to physical memory at the page level. A page is 4 kilobytes on many systems, but other page sizes may be used. Access to memory by the functions 640A-640C may be controlled at a level of granularity smaller than a page. For example, when a page of memory is added to an EPT, a flag may be set in the SEAM command that indicates that sub-page access control is desired. If the flag is set, an additional 64-bit vector is provided (e.g., at a memory address or as part of the command), with each bit in the vector indicating whether a corresponding 1/64^{th} portion of the page (e.g., 64 bytes) is shared to other functions within the TEE or remains private. Vectors of other sizes may be used to provide other levels of granularity (e.g., a 4-bit vector that controls access for each quarter of the page (e.g., 1028 bytes)).

As an alternative to SEAM function calls, TDCALLs or VMFUNC calls may be used. Each of these is a different hardware implementation that provides processor-based protections to TEEs.

In some example embodiments, in addition to (or instead of) switching EPTs when switching between the functions 640A-640C, the TDX module 620 may switch other registers such as control register 3 (CR3), containing the physical address of the base of the paging-structure hierarchy; instruction pointer register (RIP); or a control structure that includes multiple registers, such as the Intel^{®} Virtual Machine Control Structure (VMCS).

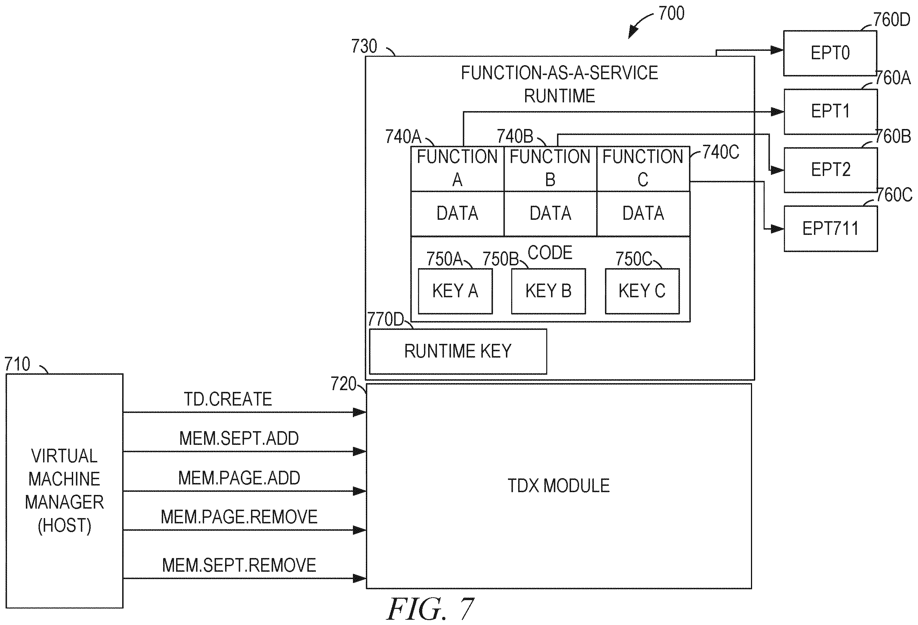

FIG. 7 is a block diagram 700 of a communication sequence between a VMM 710 and a TDX module 720 along with the resulting memory space of a TEE 730, according to some example embodiments. Within the TEE 730 are functions 740A, 740B, and 740C, each with its own data. By contrast with the block diagram 600, in which all functions 640A-640C shared a single encryption key 650, each of the functions 740A-740C has a separate encryption key 750A, 750B, or 750C. Additionally, the FaaS runtime of the TEE 730 has a separate encryption key 750D. Each of the functions 740A-740C and the FaaS runtime has a separate EPT 760A, 760B, 760C, or 760D. The FaaS runtime of the TEE 730 may be a guest operating system configured to invoke one or more of the functions 740A-740C.

In the implementation of FIG. 7, the TDX module 720 derives the unique encryption keys 750A-750D for the functions 740A-740C and the FaaS runtime. The memory allocated to each function is encrypted using the corresponding encryption key. Thus, if malicious code is injected into a function and the malicious code is somehow able to bypass the security provided by using the separate EPTs 760A-760D, the malicious code still will not be able to decrypt the accessed memory, providing an additional layer of security.

FIG. 8 is a flowchart illustrating operations of a method 800 suitable for execution by a server in isolating memory in TEEs, according to some example embodiments. The method 800 includes operations 810, 820, and 830. By way of example and not limitation, the method 800 may be performed by the FaaS server 110A of FIG. 1, using the modules, databases, and structures shown in FIGS. 2-7.

In operation 810, a hardware processor (e.g., the TDX module 620 or 720 of FIGS. 6-7 operating as the trust domain module 240 of FIG. 2) of the FaaS server 110A creates a TEE. For example, the TEE 630 or 730 of FIGS. 6-7 may be created.

The hardware processor, in operation 820, allocates, to the TEE, a plurality of portions of memory comprising a first portion and a second portion. For example, the EPTs 660A-660D or 760A-760D, along with additional physical pages referenced by the EPTs 660A-660D or 760A-760D may be allocated to the TEE. The first portion and the second portion may be allocated for different functions (e.g., the functions 640A and 640B or 740A and 740B) and may use different encryption keys (e.g., the encryption keys 750A and 750B) or the same encryption key (e.g., the single encryption key 650).

In operation 830, the hardware processor prevents instructions executing in the first portion from accessing data in the second portion. For example, code of the function 640A is loaded in the first portion of memory associated with the function 640A. Instructions that access memory, executed from within the function 640A, are processed using the EPT 660A. Since the physical pages referenced by the other EPTs 660B-660D are not referenced by the EPT 660A, the instructions executed within the function 640A are prevented from accessing the data associated with the other functions 640B and 640C, either of which may be considered to be the second function of operation 830.

As another example, code of the function 740Ais loaded in the first portion of memory associated with the function 740A using the encryption key 750A. Instructions that access memory, executed from within the function 740A, are processed using the EPT 760A. Since the physical pages referenced by the other EPTs 760B-760D are not referenced by the EPT 760A, the instructions executed within the function 740A are prevented from accessing the data associated with the other functions 740B and 740C, either of which may be considered to be the second function of operation 830. Additionally, even if this security were bypassed, the hardware processor further prevents instructions executing in the first portion from accessing data in the second portion because the processor applies the encryption key 750A (or a decryption key counterpart, for asymmetric encryption) to the accessed data. Since a different encryption key (e.g., the encryption key 750B or 750C) was used to encrypt the data by the other function, the decrypted data is meaningless and access to the data of the second portion is prevented.

Thus, by use of the method 800, the FaaS server 110A is enabled to execute any number of functions in a single TEE without losing the security advantages of using a separate EPT for each function. Using fewer TEEs reduces the overhead of TEE creation and teardown, allowing a single server to provide more functions.

In view of the above described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system to isolate memory with a trusted execution environment (TEE), the system comprising: a processor; and a memory that stores instructions that, when executed by the processor, cause the processor to perform operations comprising: allocating, to a TEE, a plurality of portions of memory comprising a first portion and a second portion; and preventing instructions executing in the first portion from accessing data stored in the second portion.

In Example 2, the subject matter of Example 1 includes, wherein the operations further comprise: in response to a secure-arbitration mode (SEAM) function call, switching between a first extended page table (EPT) for the first portion to a second EPT for the second portion.

In Example 3, the subject matter of Examples 1-2 includes, wherein the operations further comprise: encrypting the first portion using a first encryption key; and encrypting the second portion using a second encryption key.

In Example 4, the subject matter of Examples 1-3 includes, wherein: the plurality of portions comprises a third portion; and instructions executing in the third portion are permitted to access data stored in the first portion.

In Example 5, the subject matter of Example 4 includes, wherein the access of the data in the first portion is controlled at a level of granularity smaller than a page.

In Example 6, the subject matter of Examples 1-5 includes, wherein the operations further comprise: preventing instructions executing in the second portion from accessing data stored in the first portion.

In Example 7, the subject matter of Examples 1-6 includes, wherein the operations further comprise: creating the TEE is in response to a secure-arbitration mode (SEAM) function call.

In Example 8, the subject matter of Example 7 includes, wherein: the creation of the TEE allocates a third portion of the memory to the TEE; and the operations further comprise: in response to a second SEAM function call, allocating the first portion of the memory to the TEE; and in response to a third SEAM function call, allocating the second portion of the memory to the TEE.

In Example 9, the subject matter of Example 8 includes, wherein a guest operating system runs in the third portion.

In Example 10, the subject matter of Example 9 includes, wherein the guest operating system invokes a first function in the first portion and a second function in the second portion.

Example 11 is a method to isolate memory with a trusted execution environment (TEE), the method comprising: allocating, by a processor, to a TEE, a plurality of portions of memory comprising a first portion and a second portion; and preventing, by the processor, instructions executing in the first portion from accessing data stored in the second portion.

In Example 12, the subject matter of Example 11 includes, in response to a secure-arbitration mode (SEAM) function call, switching between a first extended page table (EPT) for the first portion to a second EPT for the second portion.

In Example 13, the subject matter of Examples 11-12 includes, encrypting the first portion using a first encryption key; and encrypting the second portion using a second encryption key.

In Example 14, the subject matter of Examples 11-13 includes, wherein: the plurality of portions comprises a third portion; and instructions executing in the third portion are permitted to access data stored in the first portion.

In Example 15, the subject matter of Example 14 includes, wherein the access of the data in the first portion is controlled at a level of granularity smaller than a page.

In Example 16, the subject matter of Examples 11-15 includes, preventing instructions executing in the second portion from accessing data stored in the first portion.

In Example 17, the subject matter of Examples 11-16 includes, creating the TEE is in response to a secure-arbitration mode (SEAM) function call.

In Example 18, the subject matter of Example 17 includes, wherein: the creation of the TEE allocates a third portion of the memory to the TEE; and the method further comprises: in response to a second SEAM function call, allocating, by the processor, the first portion of the memory to the TEE; and in response to a third SEAM function call, allocating, by the processor, the second portion of the memory to the TEE.

In Example 19, the subject matter of Example 18 includes, wherein a guest operating system runs in the third portion.

In Example 20, the subject matter of Example 19 includes, wherein the guest operating system invokes a first function in the first portion and a second function in the second portion.

Example 21 is a non-transitory computer readable medium having instructions for causing a processor to isolate memory with a trusted execution environment (TEE) by performing operations comprising: allocating to a TEE, a plurality of portions of memory comprising a first portion and a second portion; and preventing instructions executing in the first portion from accessing data stored in the second portion.

In Example 22, the subject matter of Example 21 includes, wherein the operations further comprise: in response to a secure-arbitration mode (SEAM) function call, switching between a first extended page table (EPT) for the first portion to a second EPT for the second portion.

In Example 23, the subject matter of Examples 21-22 includes, wherein the operations further comprise: encrypting the first portion using a first encryption key; and encrypting the second portion using a second encryption key.

In Example 24, the subject matter of Examples 21-23 includes, wherein: the plurality of portions comprises a third portion; and instructions executing in the third portion are permitted to access data stored in the first portion.

In Example 25, the subject matter of Example 24 includes, wherein the access of the data is first portion is controlled at a level of granularity smaller than a page.

In Example 26, the subject matter of Examples 21-25 includes, wherein the operations further comprise: preventing instructions executing in the second portion from accessing data stored in the first portion.

In Example 27, the subject matter of Examples 21-26 includes, wherein the operations further comprise: creating the TEE is in response to a secure-arbitration mode (SEAM) function call.

In Example 28, the subject matter of Example 27 includes, wherein: the creation of the TEE allocates a third portion of the memory to the TEE; and the operations further comprise: in response to a second SEAM function call, allocating the first portion of the memory to the TEE; and in response to a third SEAM function call, allocating the second portion of the memory to the TEE.

In Example 29, the subject matter of Example 28 includes, wherein a guest operating system runs in the third portion.

In Example 30, the subject matter of Example 29 includes, wherein the guest operating system invokes a first function in the first portion and a second function in the second portion.

Example 31 is a system to isolate memory with a trusted execution environment (TEE), the system comprising: storage means; and processing means to: create a TEE by allocating a portion of the storage means to the TEE and preventing access to the allocated portion by instructions stored outside of the allocated portion; divide the portion of the storage means into a plurality of portions comprising a first portion and a second portion; and prevent instructions executing in the first portion from accessing data stored in the second portion.

In Example 32, the subject matter of Example 31 includes, wherein the processing means is further to: in response to a secure-arbitration mode (SEAM) function call, switch between a first extended page table (EPT) for the first portion to a second EPT for the second portion.

In Example 33, the subject matter of Examples 31-32 includes, wherein the processing means is further to: encrypt the first portion using a first encryption key; and encrypt the second portion using a second encryption key.

In Example 34, the subject matter of Examples 31-33 includes, wherein: the plurality of portions comprises a third portion; and instructions executing in the third portion are permitted to access data stored in the first portion.

In Example 35, the subject matter of Example 34 includes, wherein the access of the data in the first portion is controlled at a level of granularity smaller than a page.

In Example 36, the subject matter of Examples 31-35 includes, wherein the processing means is further to: prevent instructions executing in the second portion from accessing data stored in the first portion.

In Example 37, the subject matter of Examples 31-36 includes, wherein the processing means is further to: create the TEE is in response to a secure-arbitration mode (SEAM) function call.

In Example 38, the subject matter of Example 37 includes, wherein: the creation of the TEE allocates a third portion of the storage means to the TEE; and the processing means is further to: in response to a second SEAM function call, allocate the first portion of the storage means to the TEE; and in response to a third SEAM function call, allocate the second portion of the storage means to the TEE.

In Example 39, the subject matter of Example 38 includes, wherein a guest operating system runs in the third portion.

In Example 40, the subject matter of Example 39 includes, wherein the guest operating system invokes a first function in the first portion and a second function in the second portion.

Example 41 is at least one machine-readable medium including instructions that, when executed by processing circuitry, cause the processing circuitry to perform operations to implement of any of Examples 1-40.

Example 42 is an apparatus comprising means to implement of any of Examples 1-40.

Example 43 is a system to implement of any of Examples 1-40.

Example 44 is a method to implement of any of Examples 1-40.

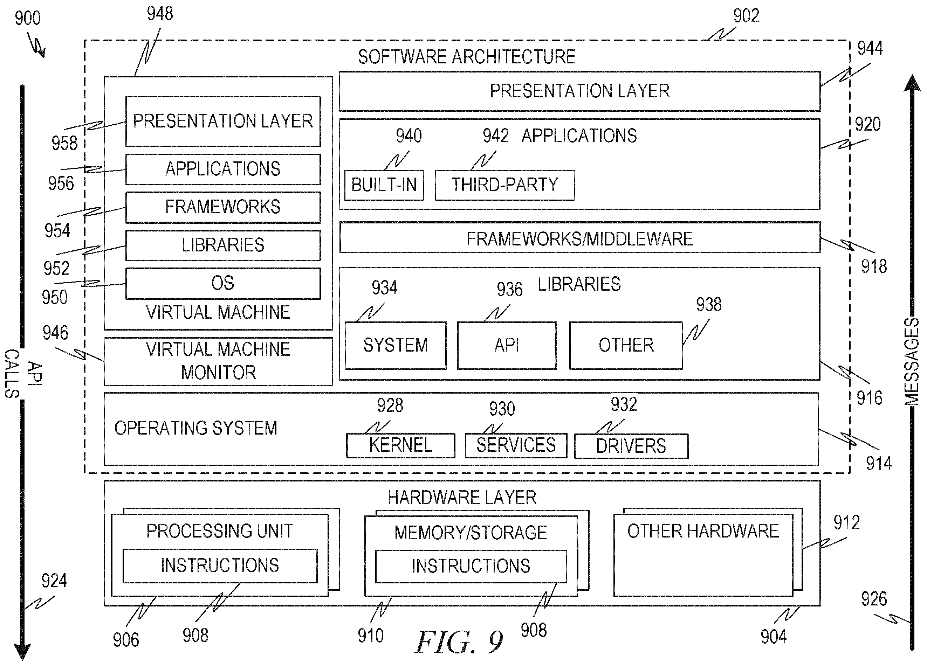

FIG. 9 is a block diagram 900 showing one example of a software architecture 902 for a computing device. The architecture 902 may be used in conjunction with various hardware architectures, for example, as described herein. FIG. 9 is merely a non-limiting example of a software architecture and many other architectures may be implemented to facilitate the functionality described herein. A representative hardware layer 904 is illustrated and can represent, for example, any of the above referenced computing devices. In some examples, the hardware layer 904 may be implemented according to the architecture of the computer system of FIG. 9.

The representative hardware layer 904 comprises one or more processing units 906 having associated executable instructions 908. Executable instructions 908 represent the executable instructions of the software architecture 902, including implementation of the methods, modules, subsystems, and components, and so forth described herein and may also include memory and/or storage modules 910, which also have executable instructions 908. Hardware layer 904 may also comprise other hardware as indicated by other hardware 912 which represents any other hardware of the hardware layer 904, such as the other hardware illustrated as part of the software architecture 902.

In the example architecture of FIG. 9, the software architecture 902 may be conceptualized as a stack of layers where each layer provides particular functionality. For example, the software architecture 902 may include layers such as an operating system 914, libraries 916, frameworks/middleware 918, applications 920, and presentation layer 944. Operationally, the applications 920 and/or other components within the layers may invoke application programming interface (API) calls 924 through the software stack and access a response, returned values, and so forth illustrated as messages 926 in response to the API calls 924. The layers illustrated are representative in nature and not all software architectures have all layers. For example, some mobile or special purpose operating systems may not provide a frameworks/middleware layer 918, while others may provide such a layer. Other software architectures may include additional or different layers.

The operating system 914 may manage hardware resources and provide common services. The operating system 914 may include, for example, a kernel 928, services 930, and drivers 932. The kernel 928 may act as an abstraction layer between the hardware and the other software layers. For example, the kernel 928 may be responsible for memory management, processor management (e.g., scheduling), component management, networking, security settings, and so on. The services 930 may provide other common services for the other software layers. In some examples, the services 930 include an interrupt service. The interrupt service may detect the receipt of an interrupt and, in response, cause the architecture 902 to pause its current processing and execute an interrupt service routine (ISR) when an interrupt is accessed.

The drivers 932 may be responsible for controlling or interfacing with the underlying hardware. For instance, the drivers 932 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 916 may provide a common infrastructure that may be utilized by the applications 920 and/or other components and/or layers. The libraries 916 typically provide functionality that allows other software modules to perform tasks in an easier fashion than to interface directly with the underlying operating system 914 functionality (e.g., kernel 928, services 930 and/or drivers 932). The libraries 916 may include system libraries 934 (e.g., C standard library) that may provide functions such as memory allocation functions, string manipulation functions, mathematic functions, and the like. In addition, the libraries 916 may include API libraries 936 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 916 may also include a wide variety of other libraries 938 to provide many other APIs to the applications 920 and other software components/modules.

The frameworks/middleware 918 may provide a higher-level common infrastructure that may be utilized by the applications 920 and/or other software components/modules. For example, the frameworks/middleware 918 may provide various graphic user interface (GUI) functions, high-level resource management, high-level location services, and so forth. The frameworks/middleware 918 may provide a broad spectrum of other APIs that may be utilized by the applications 920 and/or other software components/modules, some of which may be specific to a particular operating system or platform.

The applications 920 include built-in applications 940 and/or third-party applications 942. Examples of representative built-in applications 940 may include, but are not limited to, a contacts application, a browser application, a book reader application, a location application, a media application, a messaging application, and/or a game application. Third-party applications 942 may include any of the built-in applications as well as a broad assortment of other applications. In a specific example, the third-party application 942 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 942 may invoke the API calls 924 provided by the mobile operating system such as operating system 914 to facilitate functionality described herein.

The applications 920 may utilize built in operating system functions (e.g., kernel 928, services 930 and/or drivers 932), libraries (e.g., system libraries 934, API libraries 936, and other libraries 938), frameworks/middleware 918 to create user interfaces to interact with users of the system. Alternatively, or additionally, in some systems, interactions with a user may occur through a presentation layer, such as presentation layer 944. In these systems, the application/module "logic" can be separated from the aspects of the application/module that interact with a user.

Some software architectures utilize virtual machines. In the example of FIG. 9, this is illustrated by virtual machine 948. A virtual machine creates a software environment where applications/modules can execute as if they were executing on a hardware computing device. A virtual machine is hosted by a host operating system (operating system 914) and typically, although not always, has a virtual machine monitor 946, which manages the operation of the virtual machine as well as the interface with the host operating system (i.e., operating system 914). A software architecture executes within the virtual machine 948 such as an operating system 950, libraries 952, frameworks/middleware 954, applications 956 and/or presentation layer 958. These layers of software architecture executing within the virtual machine 948 can be the same as corresponding layers previously described or may be different.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

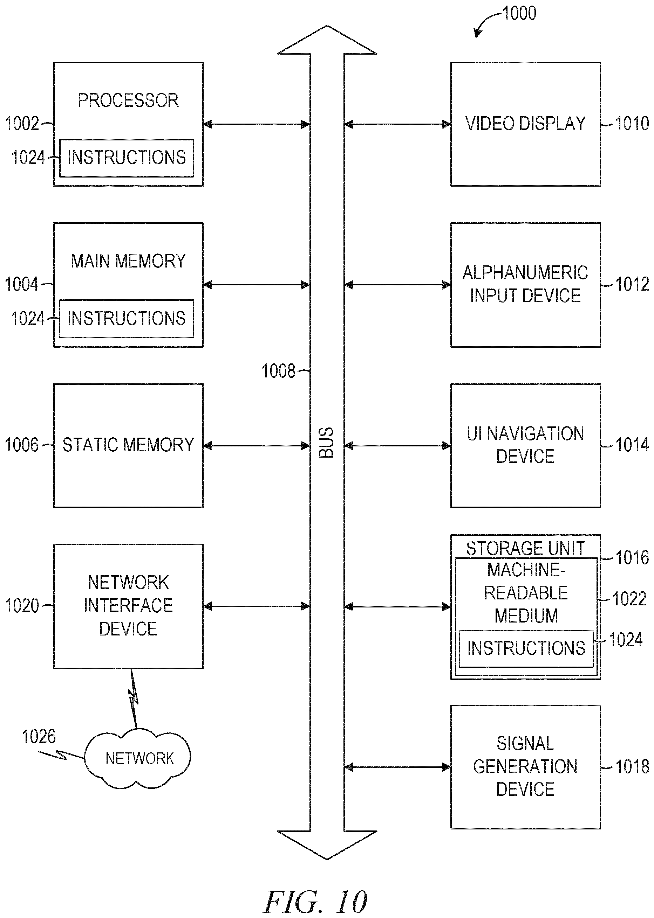

FIG. 10 is a block diagram of a machine in the example form of a computer system 1000 within which instructions 1024 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1000 includes a processor 1002 (e.g., a central processing unit (CPU), a graphics processing unit (GPU), or both), a main memory 1004, and a static memory 1006, which communicate with each other via a bus 808. The computer system 1000 may further include a video display unit 1010 (e.g., a liquid crystal display (LCD) or a cathode ray tube (CRT)). The computer system 1000 also includes an alphanumeric input device 1012 (e.g., a keyboard or a touch-sensitive display screen), a user interface (UI) navigation (or cursor control) device 1014 (e.g., a mouse), a storage unit 1016, a signal generation device 1018 (e.g., a speaker), and a network interface device 1020.

### MACHINE-READABLE MEDIUM

The storage unit 1016 includes a machine-readable medium 1022 on which is stored one or more sets of data structures and instructions 1024 (e.g., software) embodying or utilized by any one or more of the methodologies or functions described herein. The instructions 1024 may also reside, completely or at least partially, within the main memory 1004 and/or within the processor 1002 during execution thereof by the computer system 1000, with the main memory 1004 and the processor 1002 also constituting machine-readable media 1022.

While the machine-readable medium 1022 is shown in an example embodiment to be a single medium, the term "machine-readable medium" may include a single medium or multiple media (e.g., a centralized or distributed database, and/or associated caches and servers) that store the one or more instructions 1024 or data structures. The term "machine-readable medium" shall also be taken to include any tangible medium that is capable of storing, encoding, or carrying instructions 1024 for execution by the machine and that cause the machine to perform any one or more of the methodologies of the present disclosure, or that is capable of storing, encoding, or carrying data structures utilized by or associated with such instructions 1024. The term "machine-readable medium" shall accordingly be taken to include, but not be limited to, solid-state memories, and optical and magnetic media. Specific examples of machine-readable media 1022 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM )disks. A machine-readable medium is not a transmission medium.

### TRANSMISSION MEDIUM

The instructions 1024 may further be transmitted or received over a communications network 1026 using a transmission medium. The instructions 1024 may be transmitted using the network interface device 1020 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 1024 for execution by the machine, and includes digital or analog communications signals or other intangible media to facilitate communication of such software.

Although specific example embodiments are described herein, it will be evident that various modifications and changes may be made to these embodiments without departing from the broader spirit and scope of the disclosure. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a nonexclusive "or," unless specifically stated otherwise.

## Claims

1. A method to isolate memory with a trusted execution environment (TEE), the method comprising:
allocating, by a processor, to a TEE, a plurality of portions of memory comprising a first portion and a second portion; and
preventing, by the processor, instructions executing in the first portion from accessing data stored in the second portion.

2. The method of claim 1, further comprising:
in response to a secure-arbitration mode (SEAM) function call, switching between a first extended page table (EPT) for the first portion to a second EPT for the second portion.

3. The method of claim 1 or claim 2, further comprising:
encrypting the first portion using a first encryption key; and
encrypting the second portion using a second encryption key.

4. The method of any one of claims 1 to 3, wherein:
the plurality of portions comprises a third portion; and
instructions executing in the third portion are permitted to access data stored in the first portion.

5. The method of claim 4, wherein the access of the data in the first portion is controlled at a level of granularity smaller than a page.

6. The method of any one of claims 1 to 5, further comprising:
preventing instructions executing in the second portion from accessing data stored in the first portion.

7. The method of any one of claims 1 to 6, further comprising:
creating the TEE is in response to a secure-arbitration mode (SEAM) function call.

8. The method of claim 7, wherein:
the creation of the TEE allocates a third portion of the memory to the TEE; and
the method further comprises:
in response to a second SEAM function call, allocating, by the processor, the first portion of the memory to the TEE; and
in response to a third SEAM function call, allocating, by the processor, the second portion of the memory to the TEE.

9. The method of claim 8, wherein a guest operating system runs in the third portion.

10. The method of claim 9, wherein the guest operating system invokes a first function in the first portion and a second function in the second portion.

11. An apparatus comprising means to perform a method as claimed in any preceding claim.

12. Machine-readable storage including machine-readable instructions, when executed, to implement a method or realize an apparatus as claimed in any preceding claim.
